## Europäisches Patentamt

## European Patent Office

## Office européen des brevets

(11) Numéro de publication: **0 306 426**
**A1**

# DEMANDE DE BREVET EUROPEEN

(21) Numéro de dépôt: **88430022.9**

(22) Date de dépôt: **22.07.88**

(51) Int. Cl.⁴: **G 07 B 13/08**
G 07 C 9/00, H 04 M 11/08

(30) Priorité: **07.08.87 FR 8711390**

(43) Date de publication de la demande:
**08.03.89 Bulletin 89/10**

(84) Etats contractants désignés:
**BE CH DE ES GB IT LI NL SE**

(71) Demandeur: **Ricard, Claude**
**Villa Sainte Madeleine 52, Cours Gambetta**
**F-13100 Aix-en-Provence (FR)**

(72) Inventeur: **Ricard, Claude**
**Villa Sainte Madeleine 52, Cours Gambetta**
**F-13100 Aix-en-Provence (FR)**

(74) Mandataire: **Azais, Henri et al**
**c/o CABINET BEAU DE LOMENIE 14, rue Raphael**
**F-13008 Marseille (FR)**

(54) **Procédés et dispositifs adapteurs pour introduire des données dans des taximètres électroniques à partir d'un ordinateur central relié temporairement à un terminal local.**

(57) L'invention a pour objet des procédés et des dispositifs adaptateurs pour introduire des données dans des taximètres électroniques à partir d'un ordinateur central relié temporairement à un terminal local.

Pour introduire des données, notamment des données de tarifications, dans des taximètres (6), on connecte ceux-ci un par un sur un dispositif adaptateur (5) qui est connecté sur la prise entrée-sortie (4) d'un terminal local (3b), par exemple d'un "MINITEL" On établit une liaison entre ledit terminal (3b) et un ordinateur central (10) par l'intermédiaire d'une ligne téléphonique (2) et d'un réseau (1) de télécommunication. L'adaptateur (5) comporte un microprocesseur qui est programmé pour reconnaître la nature des paqueets d'informations reçus de l'ordinateur central, pour transcoder celles-ci et pour les transférer aux taximètres dans le code et selon le protocole de dialogue qui leur correspond.

Une application est la mise à jour des données de tarification dans les taximètres.

Fig.1

EP 0 306 426 A1

## Description

## Procédés et dispositifs adaptateurs pour introduire des données dans des taximètres électroniques à partir d'un ordinateur central relié temporairement à un terminal local.

La présente invention a pour objet des procédés et des dispositifs adaptateurs pour entrer des données dans des taximètres électroniques au moyen d'un ordinateur central, relié temporairement à un terminal local.

Le secteur technique de l'invention est celui de la construction et de la programmation des taximètres électroniques.

On connaît des taximètres électroniques comportant un microprocesseur et une mémoire vive, entretenue par une source de tension continue permanente, qui contient, notamment, les prix unitaires de temps d'occupation et de distance parcourue à partir desquels le microprocesseur calcule le prix des courses.

Ces prix varient d'un lieu à un autre et pour un même lieu, ils doivent être remis à jour fréquemment.

On connaît des valises de programmation qui contiennent une unité de calcul et des mémoires dans lesquelles on introduit les nouvelles données de tarification. Chaque taximètre comporte des prises entrée-sortie qui peuvent être connectées aux prises entrée-sortie de la valise de programmation et l'unité de calcul externe contenue dans celle-ci est programmée pour dialoguer avec les taximètres suivant un protocole de dialogue propre à ceux-ci. Au cours de ce dialogue, l'unité de calcul externe efface la mémoire vive du taximètre qui lui est connecté et transfère dans celle-ci les nouvelles données de tarification qui sont enregistrées dans sa propre mémoire.

Le brevet FR. 76/37.706 (Publication 2.335.892) PLESSEY décrit des taximètres et un appareillage de chargement de ceux-ci qui comporte un microprocesseur, un clavier, des mémoires et un circuit d'interface qui permet de connecter successivement des taximètres sur l'appareillage de chargement et de transférer dans ceux-ci des données de tarification.

L'utilisation des valises de programmation ou des appareillages de chargement des taximètres est contrôlé par les Services Officiels chargés de surveiller les appareils de mesure et de tarification et elle est réservée à ces services ou à des personnes autorisées par ceux-ci.

Cette solution nécessite la construction de nombreuses valises de programmation, une ou plusieurs par ville importante et un contrôle précis de l'utilisation de celles-ci.

La multiplication des valises entraîne des possibilités de fraude par des personnes non autorisées, qui peuvent se procurer une valise et l'utiliser pour introduire dans des taximètres des prix unitaires majorés.

L'objectif de la présente invention est de procurer des moyens moins coûteux et plus sûrs, permettant de reprogrammer tous les taximètres d'un pays.

On connaît des réseaux de télécommunication, tel que le réseau TRANSPAC, qui permettent d'appeler des ordinateurs centraux dits serveurs à partir de postes téléphoniques, associés à des terminaux locaux, par exemple des terminaux télématiques appelés "MINITEL" qui comportent un clavier, un écran d'affichage et un "modem", c'est-à-dire un modulateur-démodulateur, qui permet d'envoyer sur les lignes téléphoniques des signaux binaires, sous forme de fréquences audio compatibles avec ces lignes.

Le terminal peut également être un mini-ordinateur équipé d'un "modem". Une fois la liaison établie, le serveur envoie au terminal local des paquets d'informations et celui-ci les affiche sur son écran.

Un"MINITEL"ou un mini-ordinateur comporte une interface avec des prises entrées-sorties, sur lesquelles en peut brancher, notamment une imprimante qui peut imprimer les informations qui apparaissent sur l'écran.

L'utilisateur d'un tel réseau fait un numéro d'appel sur son appareil téléphonique qui le met en liaison avec le réseau. Il compose ensuite un numéro de code sur le clavier du terminal qui le connecte à un serveur déterminé. Eventuellement, il compose ensuite sur le clavier du terminal un numéro de passe qui lui est propre et qui permet au serveur d'identifier le demandeur et de lui facturer des services.

Tout ce qui précède est bien connu.

L'objectif de l'invention est atteint par un procédé pour entrer des données dans un taximètre, notamment des données de tarification qui varient suivant la ville où roulent les taxis, lequel procédé comporte les opérations suivantes : ou enregistre dans le mémoire d'un ordinateur central, accessible par un réseau de télécommunication, une table desdites données correspondant à différentes villes, on branche les taximètres un par un par l'intermédiaire d'un dispositif adaptateur sur la prise entrée-sortie d'un terminal, on connecte ledit terminal audit ordinateur central par une ligne téléphonique, le demandeur s'identifie en frappant un numéro de passe personnel sur le clavier dudit terminal et il commande le transfert desdits données dans ledit taximètre en appuyant sur la touche "envoi" dudit terminal.

Selon un mode de réalisation préférentiel, les données sont transmises par ledit ordinateur central audit terminal sous forme de paquets de données en code ASCII et ledit adaptateur comporte un microprocesseur qui est programmé pour reconnaître la nature des paquets de données sortant par la prise entrée-sortie dudit terminal pour les transcoder et pour les transmettre auxdits taximètres dans le code et selon le protocole de dialogue qui correspond à chaque taximètre.

Avantageusement, chaque adaptateur comporte une mémoire morte, dans laquelle est enregistré un numéro de code secret propre audit adaptateur, l'on enregistre dans la mémoire de l'ordinateur central une table de correspondance entre le numéro secret de chaque adaptateur et les numéros de passe personnels des personnes habilitées à utiliser cet adaptateur et l'ordinateur central qui reçoit un appel accompagné du numéro de passe du demandeur détermine le numéro de code secret de l'adaptateur et il envoie ce numéro de code sous forme cachée dans un octet de contrôle accompagnant chaque paquet d'informations et ledit microprocesseur est programmé pour décrypter le numéro de code caché dans ledit octet de contrôle, pour le comparer à son propre numéro de code et pour transférer les données reçues au taximètre uniquement si les deux numéros coïncident.

Un dispositif adaptateur selon l'invention comporte un microprocesseur, une prise entrée-sortie qui est connectée sur la prise entrée-sortie dudit terminal et une prise entre-sortie, sur laquelle on connecte un par un lesdits taximètres, lequel microprocesseur est programmé pour reconnaître la nature des paquets d'informations qu'il reçoit dudit ordinateur central en code ASCII pour transcoder celles-ci dans le code adapté audit taximètre et pour dialoguer avec ledit taximètre selon le protocole de dialogue qui correspond à celui-ci.

Avantageusement, un dispositif adaptateur selon l'invention comporte une mémoire morte dans laquelle est enregistré un code secret propre audit adaptateur, ledit ordinateur central a en mémoire une table de correspondance entre les mots de passe des utilisateurs et le code secret de l'adaptateur utilisé par ceux-ci et, chaque fois qu'il envoie un paquet d'informations demandé par un utilisateur, l'ordinateur central y incorpore ledit code secret sous forme cachée et ledit microprocesseur est programmé pour décrypter le code caché dans le paquet d'information et pour le comparer audit code secret.

L'invention a pour résultat la possibilité de programmer un très grand nombre de taximètres situés dans des villes différentes à partir d'un même ordinateur central, qui peut être surveillé facilement par le Service Officiel de contrôle des taximètres.

Les adaptateurs nécessaires pour brancher les taximètres sur un terminal sont des appareils plus simples et moins coûteux que des valises de programmation. De plus, grâce à l'enregistrement d'un code dans chaque adaptateur qui reste secret et qui est transmis dans chaque message sous forme cachée, le procédé selon l'invention permet d'éviter les fraudes consistant à accéder par le réseau à l'ordinateur central qui est seul à connaître le code secret de chaque adaptateur, associé aux numéros de passe des personnes habilitées à utiliser cet adaptateur.

La description suivante se réfère aux dessins annexés qui représentent, sans aucun caractère limitatif, un exemple de réalisation d'un dispositif selon l'invention.

La figure 1 est une vue d'ensemble schématique d'une installation pour la mise en oeuvre des procédés selon l'invention.

La figure 2 est un bloc diagramme des composants essentiels d'un adaptateur selon l'invention.

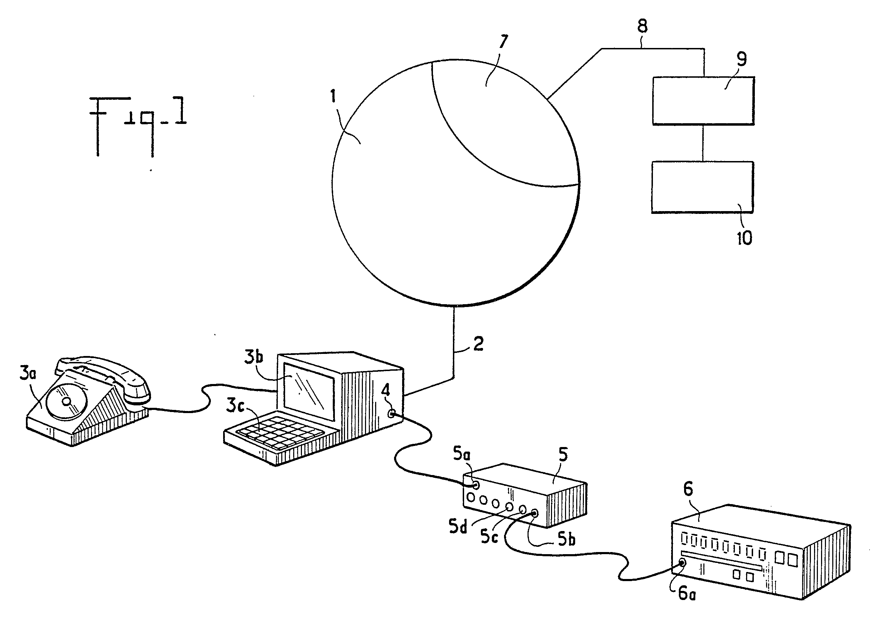

La figure 1 représente schématiquement l'ensemble d'une installation pour la mise en oeuvre d'un procédé selon l'invention.

Le repère 1 représente un réseau de télécommunications commuté permettant de mettre en liaison deux postes d'abonnés, par exemple un réseau téléphonique.

Le repère 2 représente une ligne d'abonné arrivant par exemple chez un installateur de taximètres qui dispose d'un poste téléphonique 3a et d'un terminal 3b, qui peut être par exemple un"MINITEL"connecté par un "modem" à la ligne téléphonique ou un mini-ordinateur pourvu d'une interface de liaison avec la ligne du résear. Le terminal 3b comporte un clavier 3c qui permet d'entrer des caractères alpha-numériques dans le terminal. Il comporte également une prise entrées-sorties 4 qui est par exemple, la prise d'imprimante dans le cas d'un"MINITEL".

Le repère 5 représente un dispositif adaptateur qui comporte une première borne 5a connectée à la prise 4 et une deuxième borne 5b ou une série de plusieurs bornes 5b, 5c, 5d.

Des taximètres électroniques 6 équipés d'une prise de connexion entrée-sortie 6a sont connectés un par un, par l'intermédiaire de cette prise sur l'une des prises 5b, 5c, 5d qui corespond au type ou à la marque du taximètre.

Le repère 7 représente un réseau de transmission de données numériques tel que par exemple le réseau TRANSPAC en FRANCE, qui est connecté au réseau de télécommunication 1.

Le repère 8 représente une ligne qui relie le réseau 7 à l'interface entrées-sorties 9 d'un calculateur central ou serveur qui contient en mémoire des données de tarification mises à jour en vue de transférer celles-ci dans les taximètres électroniques 6.

Chaque installateur agréé par les Services Officiels dispose d'un minitel 3b et d'un code d'accès personnel qui lui permet de connecter le"MINITEL"au calculateur central 10, par l'intermédiaire de sa ligne téléphonique 2 et du réseau TRANSPAC et d'établir avec l'ordinateur central, un dialogue interactif au moyen du clavier 3c.

Les prix unitaires de tarification des taxis varient d'une ville à l'autre et l'ordinateur central contient en mémoire les prix unitaires correspondant à chaque ville associés à un code qui désigne la ville et l'installateur qui appelle, transmet à l'ordinateur central le code de la ville concernée et l'ordinateur central envoie les données correspondant à cette ville. Ainsi un seul ordinateur central permet de reprogrammer à distance tous les taximètres d'un même pays.

Selon un mode de réalisation préférentiel, les données transmises par l'ordinateur central sont exprimées dans le code ASCII qui permet de coder sur huit bits toutes les lettres, les chiffres et tous les autres caractères imprimables usuels et sont transmis en série sous forme de paquets d'informations. Chaque paquet d'informations comporte par exemple, dans cet ordre :

1°) Le caractère dièze (#) en code ASCII qui indique le début d'un paquet d'infomations et qui est réservé à cet usage.

2°) Un en-tête d'un ou plusieurs octets qui définissent la nature des informations qui suivent, qui peuvent être soit un ordre à exécuter par l'adaptateur, soit des ordres à transmettre par l'adaptateur au taximètre, soit des données à transmettre au taximètre.

L'en-tête comporte, en outre, une combinaison de trois caractères en code ASCII qui définit le nombre de caractères qui suivent.

3°) n caractères qui représentent des données à transmettre ou des instructions à exécuter

4°) Un code cyclique redondant qui sert à contrôler les informations et qui peut être constitué par exemple par la somme des bits de rang le plus élevé de tous les caractères de données ou d'instructions auquel est ajouté avantageusement, un nombre qui correspond au numéro code propre à l'adaptateur.

Les paquets d'informations reçues de l'ordinateur central ne peuvent pas être transférés directement aux taximètres. L'adaptateur 5 a pour fonction d'analyser ces paquets d'informations pour reconnaître leur nature (ordre à exécuter, ordre à transmettre, données à transmettre) et pour les transcoder afin de pouvoir les transférer aux taximètres selon le code et selon le protocole de dialogue qui correspond aux taximètres et qui varie selon le fabricant de taximètres et même selon les modèles d'un même fabricant.

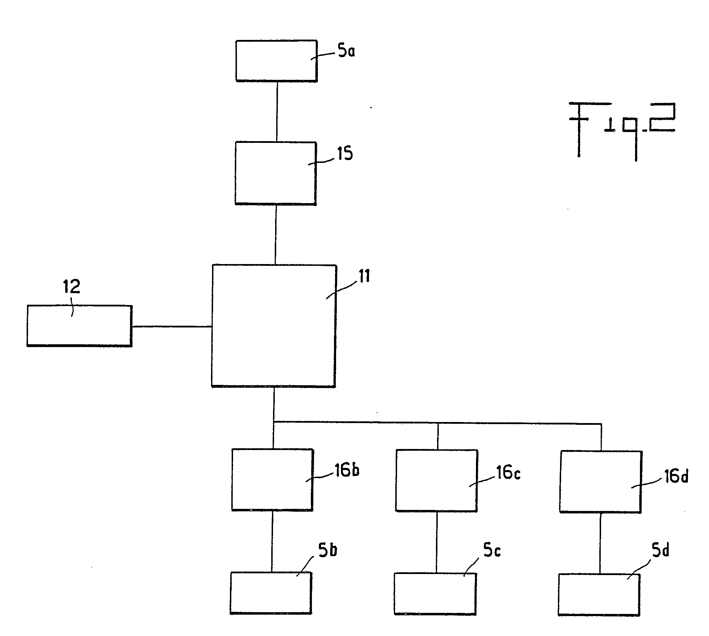

La figure 2 représente un dispositif adaptateur 5 selon l'invention.

Celui-ci comporte un microprocesseur 11 qui est associé à une mémoire centrale vive et qui est connecté à une mémoire permanente 12, qui contient un code secret propre à chaque adaptateur. Il comporte une prise entrée-sortie 5a qui est destinée à être connectée à la prise 4 du "MINITEL"et qui est reliée au processeur par une interface 15.

Il comporte également plusieurs prises d'entrée-sortie 5b, 5c, 5d qui sont reliées au microprocesseur par des interfaces respectives 16b, 16c, 16d.

Les taximètres sont connectés un par un sur celle des prises 5b, 5c, 5d qui correspond au type de taximètre.

Un des problèmes liés à la reprogrammation des taximètres à partir d'un ordinateur central, est celui d'éviter les fraudes qui pourraient être commises par une personne non autorisée, qui disposerait d'un"MINITEL"et d'un adaptateur et qui connaîtrait le code d'appel de l'ordinateur central.

A cet effet, chaque adaptateur est équipé, comme on l'a expliqué, d'une mémoire permanente 12 qui contient un code secret propre à cet adaptateur.

Un même adaptateur peut être utilisé par plusieurs personnes habilitées et chacune dispose d'un mot de passe qui lui est propre.

Celui qui appelle l'ordinateur central pour programmer un taximètre envoie par le clavier 3c, son numéro de passe propre.

L'ordinateur a en mémoire un tableau de correspondance entre les numéros de passe des utilisateurs et le code secret de l'adaptateur que ces personnes sont habilitées à utiliser.

Lorsqu'il a reçu un numéro de passe d'une personne, l'ordinateur central recherche le numéro de code secret de l'adaptateur et lorsqu'il envoie un paquet d'informations, il place ce numéro secret sous forme cachée dans l'octet de contrôle placé à la fin du paquet d'informations.

Le numéro de code secret de l'adaptateur n'apparaît jamais en clair pour éviter qu'il ne puisse être retrouvé et même les utilisateurs de l'adaptateur ne le connaissent pas.

Le microprocesseur 11 de chaque adaptateur est programmé pour décrypter le numéro de code secret qui peut apparaître par exemple dans une somme ou dans un produit avec un autre nombre que le microprocesseur peut calculer à partir du paquet d'informations qu'il reçoit.

Le microprocesseur 11 est programmé pour comparer le code décrypté au code secret inscrit dans la mémoire 12. Si ces codes coïncident, il exécute les ordres reçues et transmet les informations au taximètre 6. Dans le cas contraire, il n'exécute pas les instructions.

L'ordinateur central peut adresser à l'adaptateur des ordres à exécuter par exemple remettre à zéro tous les circuits et toutes les mémoires de l'adaptateur, ou bien remise à zéro des mémoires du taximètre, ou vérifier certaines fonctions du taximètres, par exemple, contrôler la tension de la pile d'alimentation permanente des mémoires vives ou encore transmettre à l'ordinateur central le numéro d'un taximètre. Dans ce dernier cas, l'adaptateur interroge le taximètre, puis il transcode le numéro de celui-ci en code ASCII et l'envoie à l'ordinateur central, sous forme d'un paquet de données. Si l'adaptateur reçoit des données à transmettre au taximètre, ces données sont précédées d'une adresse de rangement. L'adaptateur transmet au taximètre, suivant le protocole de dialogue qui convient à celui-ci, l'ordre de recevoir des octets de données et de les ranger en mémoire à partir de l'adresse indiquée.

Les transmissions de données sur un réseau tel que le réseau TRANSPAC, exigent que celles-ci soient transmises dans le code du réseau sous forme de paquets de données.

L'adaptateur qui est intercalé entre le minitel et les taximètres et qui comporte un microprocesseur, est un organe intermédiaire qui permet le dialogue avec chaque taximètre, suivant le protocole de dialogue prévu pour celui-ci dans le code qui convient à ce taximètre, qui est différent du code utilisé par le réseau.

**Revendications**

1. Procédé pour entrer des données, notamment des données de tarification dans des taximètres électroniques (6), caractérisé en ce que l'on enregistre dans la mémoire d'un ordinateur central (10), accessible par un réseau de télécommunication (7), une table desdites données correspondant à différentes villes, on branche les taximètres (6) un par un par l'intermédiaire d'un dispositif adaptateur (3) sur la prise entrée-sortie (4) d'un terminal (3b), on connecte ledit terminal (3b) audit ordinateur central (10) par une ligne téléphonique (2), le demandeur s'identifie en frappant un numéro de passe personnel sur le clavier (3c) dudit terminal (3b) et il commande le transfert desdites données dans ledit taximètre (6) en appuyant sur la touche "envoi" dudit terminal (3b).

2. Procédé selon la revendication 1, caractérisé en ce que les données sont transmises par ledit ordinateur central audit terminal (3b) sous forme de paquets de données en code ASCII et ledit adapteur (5) comporte un microprocesseur (11) qui est programmé pour reconnaître la nature des paquets de données sortant par la prise entrée-sortie (4) dudit terminal (3b) pour les transcoder et pour les transmettre auxdits taximètres (6) dans le code et selon le protocole de dialogue qui correspond à chaque taximètre.

3. Procédé selon la revendication 1, caractérisé en ce que chaque adaptateur comporte une mémoire morte (12) dans laquelle est enregistré un numéro de code secret propre audit adaptateur, l'on enregistre dans la mémoire de l'ordinateur central (10) une table de correspondance entre le numéro secret de chaque adaptateur (3b) et les numéros de passe personnels des personnes habilitées à utiliser cet adaptateur et l'ordinateur central (10) qui reçoit un appel accompagné du numéro de passe du demandeur détermine le numéro de code secret de l'adaptateur et il envoie ce numéro de code sous forme cachée dans un octet de contrôle accompagnant chaque paquet d'informations et ledit microprocesseur (11) est programmé pour décrypter le numéro de code caché dans ledit octet de contrôle,pour le comparer à son propre numéro de code et pour exécuter les ordres reçus du taximètre uniquement si les deux numéros coïncident.

4. Dispositif adaptateur destiné à entrer des données dans des taximètres électroniques (6) au moyen d'un terminal (3b) qui est relié temporairement à un ordinateur central (10) par un réseau commuté (1, 7) de télécommunication et de transmission de données, caractérisé en ce qu'il comporte un microprocesseur (11), une prise entrée-sortie (5a), qui est connectée à la prise entrée-sortie (4) dudit terminal et une prise entrée-sortie (5b, 5c ou 5d), sur laquelle on connecte un par un lesdits taximètres, lequel microprocesseur est programmé pour reconnaître la nature des paquets d'informations qu'il reçoit dudit ordinateur central dans le code dudit réseau, pour transcoder celles-ci dans le code adapté audit taximètre et pour dialoguer avec ledit taximètre selon le protocole de dialogue qui correspond à celui-ci.

5. Dispositif adaptateur selon la revendication 3, caractérisé en ce qu'il comporte, en outre, une mémoire permanente (11) dans laquelle est enregistré un code secret propre audit adaptateur, ledit ordinateur central a en mémoire une table de correspondance entre les mots de passe des utilisateurs et le code secret de l'adaptateur utilisé par ceux-ci et, chaque fois qu'il envoie un paquet d'informations demandé par un utilisateur, l'ordinateur central y incorpore ledit code secret sous forme cachée et ledit microprocesseur (11) est programmé pour décrypter le code caché dans le paquet d'informations et pour le comparer audit code secret.

Fig-1

EP 0 306 426 A1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 065 662 (KIENZLE) <br> * Page 8, ligne 30 - page 9, ligne 11; page 11, lignes 5-38; figures * | 1,2,4 | G 07 B 13/08 <br> G 07 C 9/00 <br> H 04 M 11/08 |
| A | | 3,5 | |
| Y | DE-A-3 342 651 (MAU) <br> * Résumé; page 12, ligne 9 - page 13, ligne 32 * <br> --- | 1,4 | |
| Y | DE-A-3 513 038 (SIEMENS) <br> * Résumé; page 4, ligne 8 - page 2, ligne 4; figures * | 2 | |
| A | | 1,4 | |
| A | MESURES REGULATION AUTOMATISME CONTROLE, vol. 51, no. 3, mars 1986, pages 69,71,72, Paris, FR; J.P. VERNAY: "Pour la télé-surveillance: utilisez les PTT" <br> * Page 71, colonne 1, ligne 38 - page 72, colonne 3, ligne 23; figures * <br> --- | 1,4 | |
| A | GB-A-1 519 721 (GREEN) <br> * Page 1, lignes 28-58; page 3, lignes 7-39; figures * <br> --- | 1,4 | DOMAINES TECHNIQUES RECHERCHES (Int. Cl.4) <br><br> G 07 B <br> G 07 C <br> H 04 M <br> G 06 F |
| A | GB-A-1 586 557 (WESTERN ENGINEERING) <br> * Revendications; figures * <br> --- | 1,4 | |
| A | EP-A-0 208 231 (SMHALCATEL) <br> * Résumé; page 7, ligne 28 - page 8, ligne 21; page 13, ligne 26 - page 15, ligne 11; figures * <br> ----- | 1 | |

Le présent rapport a été établi pour toutes les revendications

| Lieu de la recherche | Date d'achèvement de la recherche | Examinateur |
|---|---|---|
| LA HAYE | 09-11-1988 | MEYL D. |